# EUROPÄISCHE PATENTANMELDUNG

(11) **EP 1 402 985 A2**
(43) Veröffentlichungstag der Anmeldung: **31.03.2004**
(21) Anmeldenummer: 03450212.0
(22) Anmeldetag: 18.09.2003
(51) Int. Cl.: B23H 11/00, B23H 7/00

(54) **Spannvorrichtung**

(30) Priorität: 30.09.2002 AT 14732002
(71) Anmelder: Siemens AG Österreich, 1210 Wien (AT)
(72) Erfinder: Janosievics, Georg, 2651 Reichenau (AT)
(74) Vertreter: Matschnig, Franz

(57) **Zusammenfassung**

Die Erfindung betrifft eine Spannvorrichtung (100) zum Einspannen von Werkstücken (500, 501, 502, 504, 505, 506) für die Bearbeitung mit Erodiermaschinen, insbesondere Drahterodiermaschinen, bestehend aus einem Rahmen, welcher aus einer Distanz (1) sowie zwei zueinander parallel verlaufenden Seitenschenkeln (2, 3), die jeweils mit der Distanz (1) in einem rechten Winkel verbunden sind, gebildet ist, wobei der Rahmen auf einem Maschinentisch (101) befestigbar ist, und zwischen den beiden Seitenschenkeln (2, 3) zumindest ein Klemmschlitten (10, 11) parallel zu der Distanz (1) verschiebbar und in einer gewünschten Position gegen ein weiteres Verschieben verklemmbar ist. Bei einer konkreten Ausführungsform ist beispielsweise vorgesehen, dass zwischen den Seitenschenkeln (2, 3) zwei verschiebbare Klemmschlitten (10,11) vorgesehen sind.

## Beschreibung

Die Erfindung betrifft eine Spannvorrichtung zum Einspannen von Werkstücken für die Bearbeitung mit Erodiermaschinen, insbesondere Drahterodiermaschinen.

Drahterosionsmaschinen sind in der Regel computergesteuerte Werkzeugmaschinen, mit denen Werkstücke mit Hilfe von elektrischen Entladungen bearbeitet und erzeugt werden können. Bei den Werkstücken handelt es sich üblicherweise um metallische Werkstücke, aber auch beispielsweise um Elektroden. Solche Erosionsanlagen finden ihren Einsatz in der präzisen Metallverarbeitung, beispielsweise im Werkzeug-, Vorrichtungs- und Formenbau.

Ein wichtiger Aspekt ist, dass einerseits mit Drahterodiermaschinen Werkstücke unterschiedlicher Form und Größe bearbeitet werden müssen, und dass andererseits bei der Bearbeitung engste Toleranzen eingehalten werden müssen.

Bei der Bearbeitung eines Werkstückes wird ein durch elektrische Entladung "schneidender" Draht, zumeist ein Messingdraht, bahngesteuert durch das Werkstück geführt. Auf diese Weise können mit dem "erosiv-schneidenden" Drahtkomplexe Innen- als auch Außenkonturen, Durchbrüche und Bohrungen in dem zu bearbeitenden oder herzustellenden Werkstück, bei dem es sich um leitende Materialien handelt, realisiert werden.

Diese bei der Bearbeitung von Werkstücken zu beachtenden Aspekte stellen an Spannvorrichtungen zum Halten des zu bearbeitenden Werkstückes in der Erodiermaschine eine Reihe von hohen Anforderungen. Von hoher Bedeutung ist die sehr genaue Positionierung des Werkstückes in der Spannvorrichtung und anschließend in der Erodieranlage. Weiters ist von hoher Bedeutung, dass das Werkstück für den Draht gut zugänglich ist und möglichst wenige Bereiche oder gar keine Bereiche einer Bearbeitung in einem Arbeitsschritt nicht zugänglich sind.

Diese Anforderungen können prinzipiell mit bereits vorhanden Spannsystemen realisiert werden. Diese bekannten Spannsysteme basieren dabei auf der Verwendung von einzelnen, wechselbaren Komponenten, welche auf dem Maschinentisch befestigbar sind. Um mit diesen bekannten Systemen Werkstücke unterschiedlicher Größe und Form einspannen zu können, ist es meist notwendig, einzelne Komponenten des Systems gegen andere auszutauschen, welche dann auf dem Maschinentisch vor dem Spannvorgang montiert werden, oder es können spezielle Adapter, etwa für runde Werkstücke, an einer bereits montierten Komponente des Systems befestigt werden.

Die bekannten Systeme weisen daher eine Reihe von Nachteilen auf. Zum Spannen verschiedenster Werkstücke sind eine Reihe verschiedener Einzelkomponenten und Adapter notwendig. Dies erweist sich in der Regel als äußerst kostspielig, insbesondere wenn spezielle Komponenten nur selten benutzt und für wenige Anwendungen zugekauft werden müssen. Für den Benutzer erweist sich natürlich die Anwendung als kompliziert und somit zeit- und kostenintensiv, da er sich mit jedem neuen Bestandteil des System wiederum neu vertraut machen und die Verwendung erlernen muss.

Es ist eine Aufgabe der Erfindung, eine Spannvorrichtung für Werkstücke, welche mit Erodieranlagen bearbeitet werden, zu schaffen, mit der eine rasche, einfache und genaue Positionierung der Werkstücke möglich ist. Insbesondere ist es dabei eine Aufgabe der Erfindung, dass mit der Spannvorrichtung hinsichtlich ihrer Form und Größe relativ beliebige Werkstücke einspannbar sind.

Diese Aufgabe wird mit einer eingangs erwähnten Spannvorrichtung gelöst, welche erfindungsgemäß aus einem Rahmen besteht, welcher aus einer Distanz sowie zwei zueinander parallel verlaufenden Seitenschenkeln, die jeweils mit der Distanz in einem rechten Winkel verbunden sind, gebildet ist, wobei der Rahmen auf einem Maschinentisch befestigbar ist, und zwischen den beiden Seitenschenkeln zumindest ein Klemmschlitten parallel zu der Distanz verschiebbar und in einer gewünschten Position gegen ein weiteres Verschieben verklemmbar ist.

Durch die erfindungsgemäße Ausgestaltung eines stabilen Rahmens, in dem sich ein Klemmschlitten verschieben und befestigen lässt, werden verschiedene Anforderungen, welche an eine Spannvorrichtung gestellt sind, erfüllt. Der Klemmschlitten, mit dem das Werkstück gegen ein Gegenstück klemmbar ist, wird in einem sehr genau bekannten Bereich zwischen den beiden Seitenschenkeln und der Distanz geführt, sodass die Einhaltung der geforderten geringen Toleranzen möglich wird. Beispielsweise wird dabei ein Werkstück mit dem Klemmschlitten gegen die Innenseite eines Seitenschenkels des Rahmens geklemmt.

Ein weiterer Vorteil der erfindungsgemäßen Spannvorrichtung ist außerdem, dass ein Positionieren bereits außerhalb der Erodieranlage, d.h. unabhängig von dem Maschinentisch, möglich wird, wenn dies auch nicht notwendig ist, sodass bereits während die Anlage noch ein anderes Werkstück bearbeitet, ein Einspannen eines neuen Werkstückes in einer weiteren Spannvorrichtung möglich ist. Diese Spannvorrichtung mit eingespanntem Werkstück wird dann nur noch lediglich auf dem Maschinentisch befestigt, und das Werkstück befindet sich bereits in Position und kann gleich weiterbearbeitet werden. Auf diese Weise können die Stehzeiten zwischen der Bearbeitung von zwei verschiedenen Werkstücken drastisch reduziert werden.

Besonders günstig ist es, wenn zwischen den Seitenschenkeln zwei verschiebbare Klemmschlitten vorgesehen sind. Damit wird es möglich, die Position des einzuklemmenden Werkstückes relativ frei in der Spannvorrichtung zu wählen, da ein Klemmen zwischen einem Seitenschenkel nicht notwendig ist. Außerdem kann damit erreicht werden, dass die Unterfläche des Werkstückes frei, d.h. ohne irgendwelche Abdeckungen, wie etwa durch den Montagetisch, ist, sodass sie mit der Drahtführung der Erodiermaschine vollständig über- und unterfahrbar ist, was einerseits die Leistung der Maschine erhöht und natürlich das Werkstück optimal für einen Bearbeitungsvorgang zugänglich macht.

Um einerseits die Stabilität der Rahmens zu erhöhen und andererseits eine einfache und zuverlässige Führung für den oder die Klemmschlitten zu erhalten, ist bei einer konkreten Ausführungsform der Erfindung vorgesehen, dass die beiden Seitenschenkel in einem äußeren, der Distanz abgewandten Bereich mit einem Führungsrohr verbunden sind, auf dem der zumindest eine Klemmschlitten verschiebbar geführt ist.

Zweckmäßig ist es, wenn das Führungsrohr mit den Seitenschenkeln lösbar verbunden ist. Dies erlaubt einerseits ein einfaches Zerlegen der Vorrichtung für den Transport oder die platzsparende Aufbewahrung, andererseits lassen sich damit einfach bestimmte Bestandteile der Vorrichtung, wie eben die Klemmschlitten, austauschen, entfernen, gegen anders geformte Bestandteile austauschen, oder es ist einfach ein Tauschen der Position der Klemmschlitten möglich. Damit kann die erfindungsgemäße Spannvorrichtung an die unterschiedlichsten Werkstücke und Anforderungen hinsichtlich des Bearbeitungsvorganges in der Erodiermaschine anpassen.

Um eine optimale Abstützung der verschiebbaren Elemente zu ermöglichen, ist ein weiteres Führungselement im Bereich der Distanz und parallel zu der Distanz zwischen den beiden Seitenschenkeln befestigbar. Besonders zweckmäßig ist es, wenn das Führungselement unmittelbar an der Längsseite der Distanz befestigt ist, sodass sich eine besonders stabile Abstützung ergibt und ein möglichst großer Bereich für die Positionierung von einem oder mehreren Werkstücken in dem Rahmen ergibt.

Zuverlässig geführt ist der zumindest eine Klemmschlitten, wenn er eine Bohrung aufweist, mittels welcher er an dem Führungsrohr gelagert ist. Mit dieser Bohrung wird ein Klemmschlitten vor einem Zusammenbau des Rahmens auf das Führungsrohr aufgeschoben.

Besonders einfach lässt sich die erfindungsgemäße Vorrichtung zusammen setzen, wenn das Führungselement als zylinderförmiger Körper ausgeführt ist und der Klemmschlitten an einer dem Führungselement zugewandten Seite eine Nut aufweist, mit welcher der Klemmschlitten das Führungselement zumindest bereichsweise umgreift. Außerdem ist damit bei entsprechender passgenauer Ausführung der Nut und des Führungselementes ein äußerst stabiler Sitz des einen oder der mehreren Klemmschlitten gewährleistet.

Die Flexibilität der Vorrichtung lässt sich noch erheblich steigern, wenn zumindest ein weiteres Modul auf dem Führungsrohr verschiebbar gelagert und an diesem gegen ein weiteres Verschieben verklemmbar ist, da damit die Vorrichtung an noch mehr unterschiedlich geformte Werkstücke anpassbar ist.

Um eine zuverlässige und stabile Positionierung des Moduls, die für ein exaktes Einspannen von Werkstücken notwendig ist, zu erlauben, ist es weiters günstig, wenn das zumindest eine Modul an einem Klemmschlitten befestigbar ist. Beispielsweise wird dabei das Modul mit dem Klemmschlitten verschraubt.

Ein besonders exakter und fester Sitz eines Klemmschlittens ergibt sich, wenn der Klemmschlitten mittels einer Spannzange an dem Führungsrohr verklemmbar ist, wobei die Spannzange auf dem Führungsrohr verschiebbar sitzend von einer Seite in die Bohrung des Klemmschlittens einschiebbar und von der anderen Seite mittels einer Gegenmutter an dem Führungsrohr verklemmbar ist.

Ebenso ergibt sich ein exakter und stabiler Sitz des Moduls, wenn das Modul mittels einer Spannzange an dem Führungsrohr verklemmbar ist, wobei die Spannzange auf dem Führungsrohr verschiebbar sitzend von einer Seite in eine Bohrung des Moduls einschiebbar und von der anderen Seite mittels einer Gegenmutter an dem Führungsrohr verklemmbar ist.

Die bereits sehr hohe Flexibilität der Vorrichtung kann weiters noch einmal erhöht werden, wenn an der Unterseite eines Klemmschlittens und/oder an der Unterseite des zumindest einen Moduls ein oder mehrere Plättchen zur Auflage eines zu bearbeitenden Werkstückes befestigbar sind, da auf diese Weise die Anzahl der Auflagepunkte für Werkstücke nochmals erhöht werden kann, was die Möglichkeiten der zu bearbeitenden Werkstücke hinsichtlich ihrer Form und Größe nochmals nicht unbeträchtlich erhöht.

Auf diesen Plättchen wird das Werkstück beispielsweise mittels zumindest einer Spannzange befestigt, es sind aber auch Kombinationsmöglichkeiten, d.h. beispielsweise Spannen auf einem Plättchen in einem Auflagepunkt (in einer Auflagefläche) und Einklemmen mit einem Klemmschlitten in einem anderen Punkt oder einer anderen Fläche.

Besonders einfach lassen sich Werkstücke zwischen den beiden Klemmschlitten einklemmen, wenn die beiden Klemmschlitten relativ zueinander mittels zumindest eines Verbindungselementes, vorzugsweise einer Schraube, fixierbar sind. Dazu wird ein Klemmschlitten fixiert, somit die Position des Werkstückes festgelegt, und dann über die zumindest eine Schraube durch heranschrauben des zweiten Klemmschlittens eines Klemmkraft auf das Werkstück ausgeübt.

Um die Auflagefläche für ein Werkstück zu erhöhen, ist vorgesehen , dass ein Klemmschlitten an seiner zumindest einen Klemmfläche Aufnahmen, Einkerbungen, Vertiefungen, wie beispielsweise V-Nuten aufweist.

Ebenso weisen die Seitenschenkel an ihren Innenflächen Aufnahmen, Einkerbungen, Vertiefungen, wie beispielsweise V-Nuten aufweisen.

Um das freie Einspannen von kleinen, schmalen Körper zu erlauben, ist weiters an einem ersten Klemmschlitten ein erstes Schraubstockelement fest angeordnet ist, an einem zweiten Klemmschlitten in einer entsprechenden Aufnahme ein zweites Schraubstockelement parallel zu der Längsseite des Distanz verschiebbar und gegen ein Herausfallen aus der Aufnahme gesichert horizontal gegenüber dem ersten Schraubstockelement gelagert ist, und das verschiebbare Schraubstockelement mittels zumindest einer Schraube, welche weiters an dem ersten, das erste Schraubstockelement fest aufnehmenden Klemmschlitten angreift, in Bezug auf diesen ersten Klemmschlitten verschiebbar und in einer bestimmten Position fixierbar ist.

Im folgenden ist die Erfindung an Hand der Zeichnung näher erläutert. In dieser zeigen
- Fig. 1: eine perspektivische Ansicht einer erfindungsgemäßen Spannvorrichtung auf einem Maschinentisch,
- Fig. 2-5: Ansichten des Rahmens der Spannvorrichtung in verschiedenen Anordnungen,
- Fig. 6: den Verbindungsbereich eines Seitenschenkels des Rahmens mit einer Distanz,
- Fig. 7 - 9: weitere perspektivische Ansichten der erfindungsgemäßen Vorrichtung,
- Fig. 10, 10a: Detailansichten der Klemmschlitten im Bereich eines in die Klemmschlitten integrierten Schraubstockes,
- Fig. 11: eine Detailansicht eines Führungsrohres mit festgeklemmtem Klemmschlitten,
- Fig. 12-19: eine erfindungsgemäße Spannvorrichtung mit verschiedenen eingeklemmten Werkstücken.

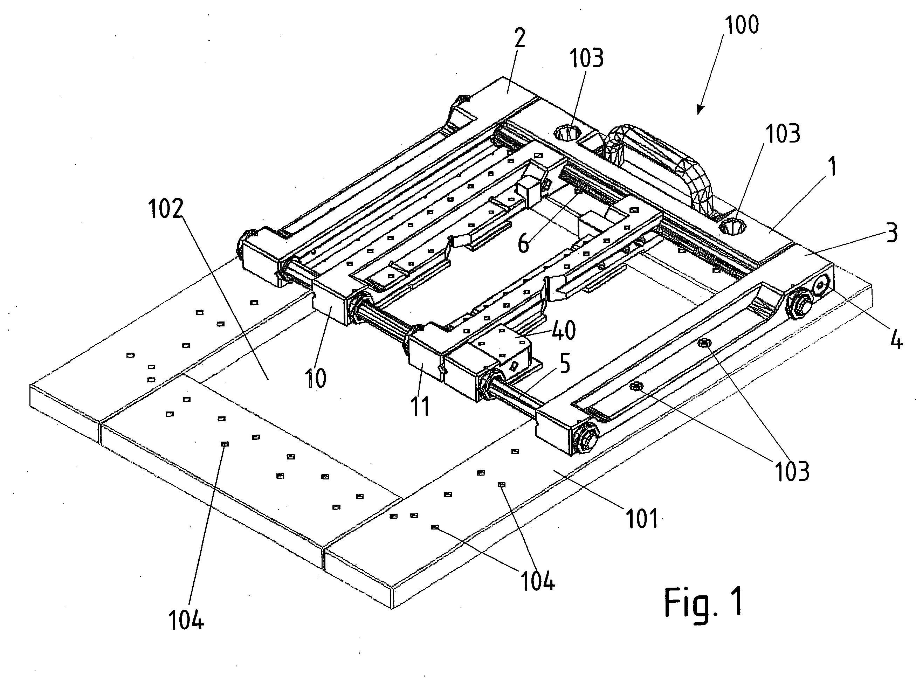

Figur 1 zeigt eine erfindungsgemäße Spannvorrichtung 100, welche auf einem Montagetisch 101 befestigt ist. Die Vorrichtung 100 besteht dabei aus einer Distanz 1 sowie zwei mit dieser verbundenen Seitenschenkeln 2, 3, die in einem rechten Winkel zu der Distanz 1 angeordnet sind. Grundsätzlich können die Seitenschenkel 2, 3 mit der Distanz 1 einstückig sein, wodurch sich eine hohe Präzision bei der Positionierung des zu bearbeitenden Werkstückes ergibt. Der Montagetisch 101 selbst besteht im wesentlichen aus einem Rahmen mit einer rechteckförmigen oder quadratischen Öffnung 102, sodass ein über dieser Öffnung 102 positioniertes Werkstück einfach mit einer oberen und unteren Drahtführung der Erosionsmaschine über- und unterfahren werden kann.

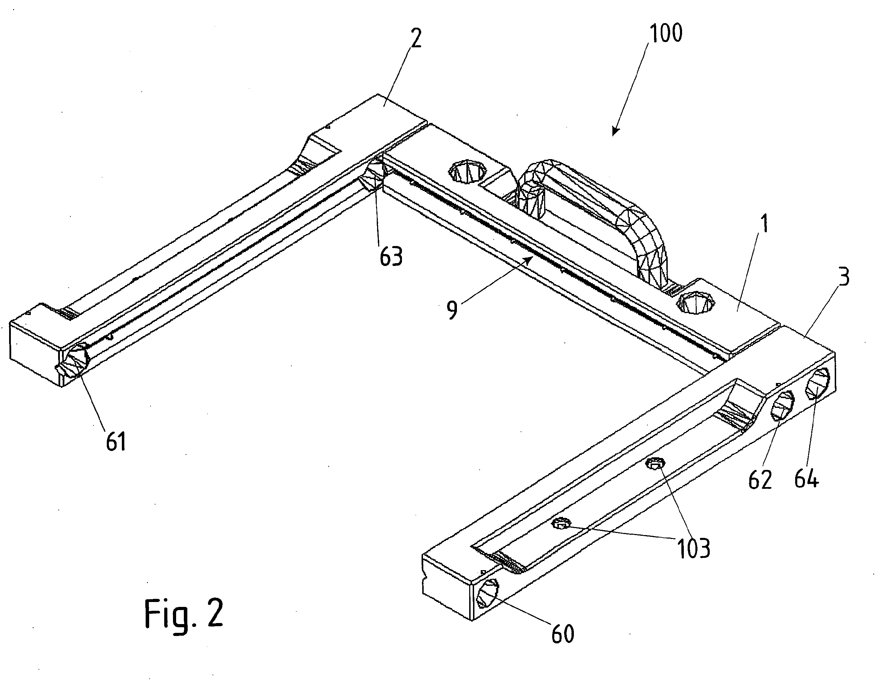

In der gezeigten Ausführungsform, wie sie auch der Figur 2 noch näher zu entnehmen ist, sind allerdings die Seitenschenkel 2, 3 lösbar an der Distanz 1 befestigt, und zwar sind diese mit der Distanz 1 verschraubt.

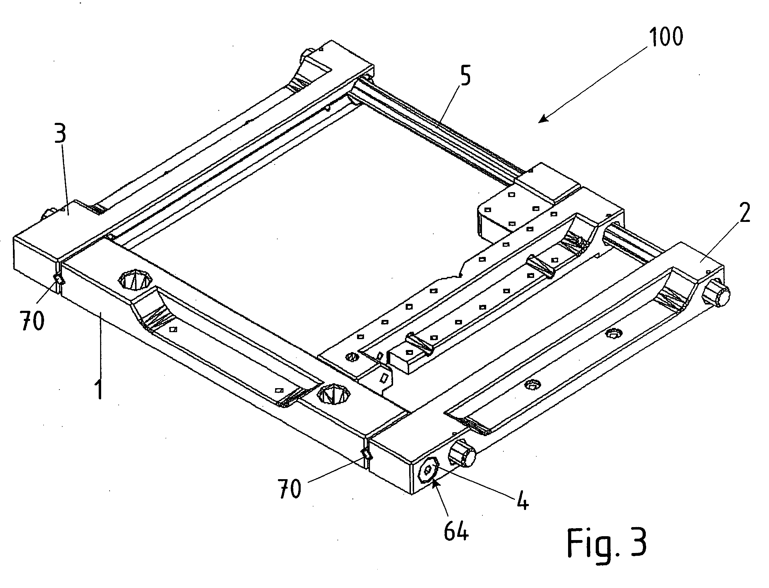

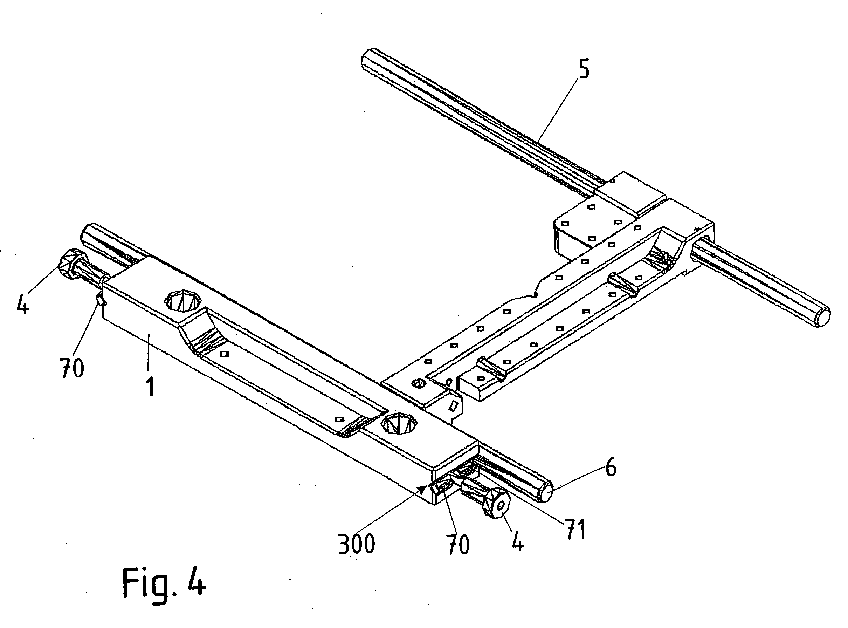

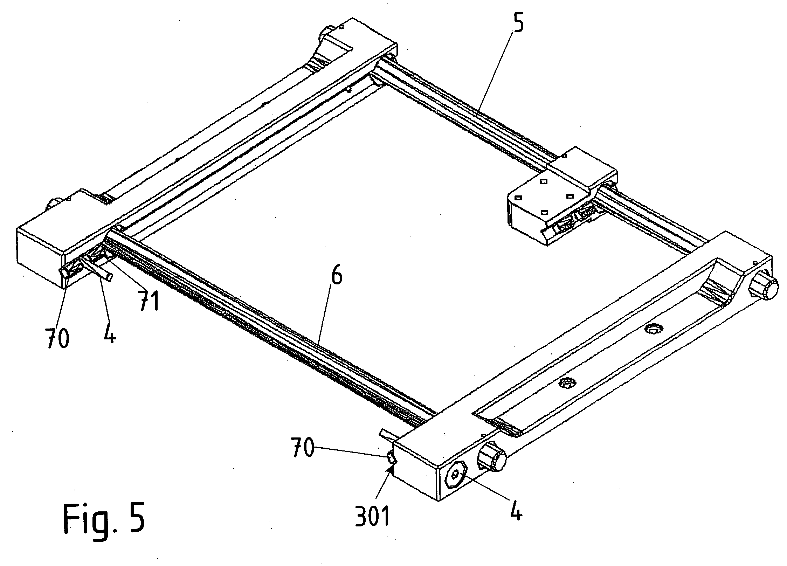

Besonders stabil und exakt lassen sich dabei die Verbindungen der Distanz 1 mit den Seitenschenkeln 2, 3 gestalten, wenn die Verschraubung immer mit einer konstanten Kraft erfolgt. Eine mögliche Art einer solchen Verbindung ist an Hand der Figuren 3 - 6 im folgenden näher erläutert.

Gemäß diesen Figuren erfolgt die Verbindung der Distanz 1 mit einem Seitenschenkel 2, 3 über je einen Eckverbindungsbolzen 4. Dazu wird der Eckverbindungsbolzen 4 über eine Bohrung 64 in dem Seitenschenkel 2, 3 in ein entsprechendes Gewinde in der Distanz 1 eingeschraubt. Sowohl die Distanz als auch die Seitenschenkel weisen an den einander zugewandten flachen V-Nuten 300, 301 auf. In der V-Nut 300 der Distanz 1 sind jeweils seitlich neben dem Gewinde für den Eckverbindungsbolzen 4 Walzen 70, 71 in die Distanz 1 verschraubt. Diese Walzen 70, 71 stabilisieren die Distanz und den entsprechenden Seitenschenkel gegen ein gegeneinander Verdrehen.

Weiters ist noch, wie etwa der Figur 3, die den verschraubten Zustand des Rahmens zeigt, zu entnehmen, das Führungsrohr 6, welches über entsprechende Bohrungen in einer weiteren V-Nut 9 der Distanz 1 angeschraubt ist, durch Bohrungen 62, 63 (Fig. 2) in den Seitenschenkeln 2, 3 geführt, sodass auch ein Verschieben der Seitenschenkel 2, 3 parallel zu der Distanz 1 nicht möglich ist.

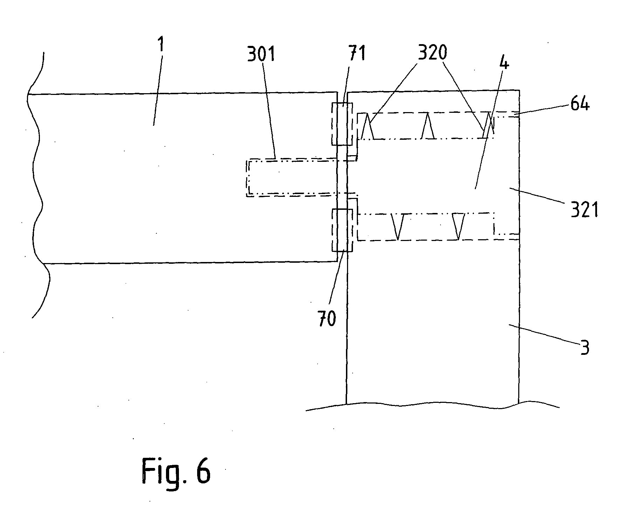

Die Seitenschenkel 2, 3 werden schließlich mittels der Eckverbindungsbolzen 4 an der Distanz 1 angeschraubt. Damit hier eine konstante Kraft erzeugt wird, sodass auch nach einem mehrmaligen Zerlegen und wieder Zusammenbauen die Seitenschenkel zu der Distanz exakt und gleich ausgerichtet sind, erfolgt dabei die Verbindung wie in Figur 6 näher gezeigt.

Die Figur 6 zeigt die Verbindung eines Seitenschenkels 3 mit der Distanz 1, zu entnehmen sind der Figur die beiden Walzen 70, 71, die seitlich des Gewindes 310 für den Eckverbindungsbolzen 4 in der V-Nut 300 der Distanz befestigt sind. Der Eckverbindungsbolzen wird von Außen durch die Bohrung 64 in dem Seitenschenkel 3 mit der Distanz 1 verschraubt.

Innerhalb der Bohrung 64 befindet sich eine Schraubenfeder 320, die sich einerseits an einer dem Kopf 321 des Eckverbindungsbolzen 4 abgewandten Innenfläche der Bohrung 64 und an der Innenflächen des Kopfes 321 des Eckverbindungsbolzen 4 abstützt. Der Eckverbindungsbolzen ist bis zu einem Anschlag an der Bohrung 64 einschraubbar.

Durch das Einschrauben des Eckverbindungsbolzens 4 wird die Feder 320 gespannt und verbindet somit die Distanz 1 mit dem Seitenschenkel 3 mit einer konstanten, von der Feder 320 ausgeübten Kraft, die unabhängig davon ist, wie fest der Eckverbindungsbolzen in das Gewinde eingeschraubt wird.

Diese Art der Verbindung weist einen wesentlichen Vorteil auf. Nach einem ersten Zusammenbauen der Vorrichtung wird diese vor einer Auslieferung nochmals Überschliffen, um die Passgenauigkeit der Bestandteile noch zu erhöhen. Damit diese Passgenauigkeit dann auch bei weiteren Zusammenbauvorgängen gewährleistet ist, ist es notwendig, dass der Zusammenbau immer mit den gleichen wirkenden Kräften erfolgt wie vor dem Überschleifen, was mit obiger Vorgangsweise in jedem Fall gewährleistet ist.

In einem der Distanz 1 abgewandten Bereich des Rahmens 100 sind die beiden Schenkel 2, 3 mit einem Führungselement 5 verbunden, bei dem es sich in der Regel aufgrund der hohen Biegesteifigkeit um ein Führungsrohr 5 handelt. Das Führungsrohr 5 ist durch entsprechende Bohrungen 60, 61 (Fig. 2) in den Seitenschenkeln 2, 3 geführt und mit diesen verschraubt.

Die Verschraubung erfolgt dabei vorzugsweise mit Spannzangen 8, welche wiederum eine äußerst stabile und passgenaue Verbindung der Elemente 2, 5; 3; 5 miteinander erlauben.

Weiters ist im Bereich der Distanz 1 wie bereits oben kurz erwähnt noch eine weiteres Führungselement 6 vorgesehen, welches auch als Vollrohr ausgeführt sein kann. Dieses Führungselement ist ebenfalls durch entsprechende Bohrungen 62, 63 in den Seitenschenkeln 2, 3 geführt und mit diesen wiederum vorzugsweise mittels Spannzangen 8 verschraubt. Zur Aufnahme des Führungselementes 6 weist die Distanz 1 eine Nut 9 auf, in welche das Führungselement 6 zumindest teilweise eingesetzt und mit entsprechenden Befestigungsmitteln, etwa Schrauben, in entsprechenden Bohrungen in der Nut 9 der Distanz 1 verschraubt ist.

Der Montagetisch 101 weist eine Reihe von Senkungen 104 auf, und der aus der Distanz 1, den Seitenschenkeln 2, 3 sowie dem Führungsrohr 5 bestehende Rahmen der Spannvorrichtung 100 ist in diesen Senkungen 104 über entsprechende Bohrungen 103, die wie gezeigt beispielsweise in den Seitenschenkeln 2, 3 und/ oder der Distanz 1 angeordnet sind, mit dem Montagetisch verschraubbar.

Zwischen den beiden Seitenschenkeln sind auf den Führungselementen 5, 6 zwei Klemmschlitten 10, 11 verschiebbar geführt, wobei die Verschiebung parallel zu der Längsseite der Distanz 1 gerichtet ist. Grundsätzlich ist es ausreichend, wenn nur ein solcher Klemmschlitten vorgesehen ist, eine Klemmung des Werkstückes erfolgt dann beispielsweise zwischen einer Klemmfläche des Klemmschlittens und der Innenseite eines Seitenschenkels 2, 3.

Der Klemmschlitten 10, 11 weist zur Führung auf dem Führungsrohr 5 eine Bohrung auf, mittels welcher er an dem Führungsrohr 5 geführt ist und über welche er, wie weiter unten noch eingehender erläutert wird, auch an dem Führungsrohr 5 fixiert wird. Zusätzlich ist jeder Klemmschlitten 10, 11 noch an dem Führungselement 6 geführt, vorzugsweise indem der Klemmschlitten an seiner dem Führungsrohr 6 zugewandten Seite eine V-Nut aufweist, mittels der sich der Klemmschlitten 10, 11 an dem Führungsrohr abstützt.

Die Verwendung von zwei Klemmschlitten 10, 11 gegenüber nur einem Klemmschlitten weist allerdings den Vorteil auf, dass die Position des Werkstückes über der Öffnung 102 des Montagetisches 101 relativ frei gewählt werden kann.

Grundlegende Voraussetzung für das Einspannen eines Werkstückes sind dafür notwendige Auflagepunkte und/oder Auflageflächen. Diese stehen mit der erfindungsgemäßen Vorrichtung in großer Anzahl zur Verfügung.

Die für eine Bearbeitung vorgesehenen Werkstücke liegen meist an Auflagepunkten oder Flächen auf oder werden durch Schraub- oder Spannvorrichtungen "frei" im Raum gehalten und fixiert. "Frei" ist gleichbedeutend damit, dass die gesamte Grund- und Werkstückoberfläche für eine mögliche Bearbeitung zur Verfügung steht.

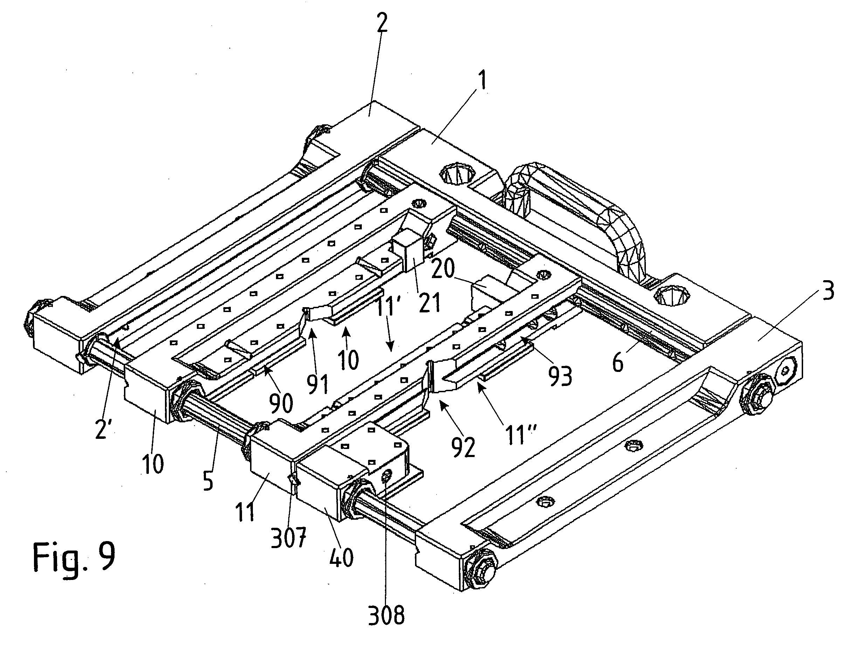

Dazu weisen die Klemmschlitten 10, 11 wie beispielsweise in Figur 9 zu erkennen entsprechende Aufnahmen, Einkerbungen, Vertiefungen, wie V-Nuten, etc. 90, 91, 92, 93 an einer oder beiden Klemmflächen 10', 10", 11', 11" sowie natürlich die Klemmflächen 10', 10", 11', 11" selbst auf. Mittels diesen Ausnehmungen etc. können die beiden Klemmschlitten 10, 11 als "Schraubstock" für verschiedene Werkstücke, insbesondere flächengleiche, runde, aber auch unsymmetrische Werkstücke verwendet werden, mit denen diese Werkstücke eingeklemmt werden. Weiters weisen die Seitenschenkel 2, 3 ebenfalls Ausnehmungen 2', wie dargestellt in Form von V-Nuten, auf, sodass auch ein Klemmen eines Werkstückes zwischen einem Seitenschenkel 2, 3 und einem Klemmschlitten 10, 11 möglich wird.

Dadurch, dass die Spannvorrichtung 1 nicht fix montiert ist, sondern einen modularen Aufbau wie oben beschrieben aufweist, ist es weiterhin möglich, die Klemmschlitten 10, 11 hinsichtlich ihrer Position zwischen den Seitenschenkeln 2, 3 zu vertauschen. Werden an den beiden Klemmseiten der Klemmschlitten 10, 11 verschiedenartige Ausnehmungen angebracht, so können auf diese Weise ein Vielzahl verschiedener Werkstücke lediglich zwischen den beiden Klemmschlitten oder zwischen einem Klemmschlitten und einem Seitenschenkel eingespannt werden.

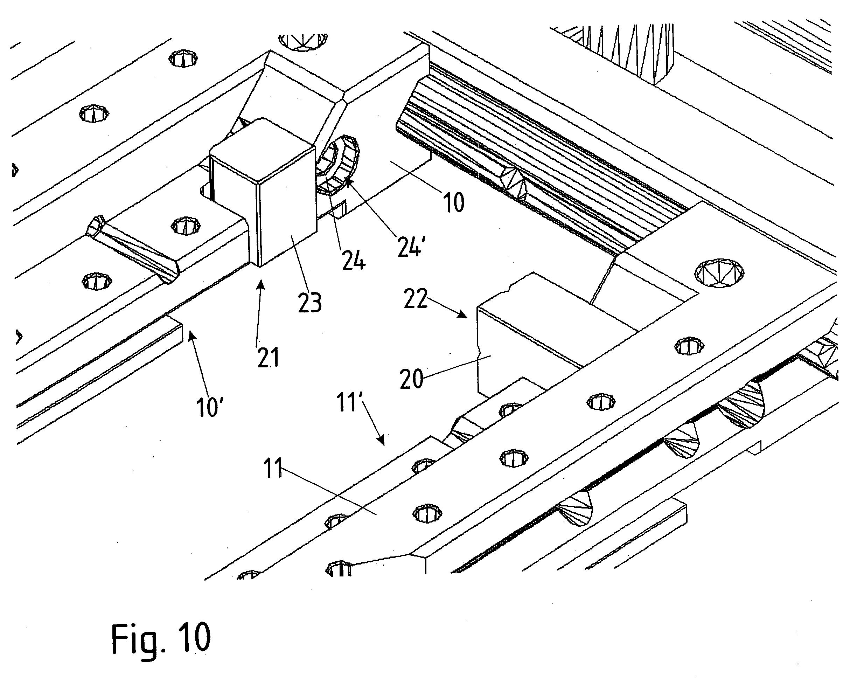

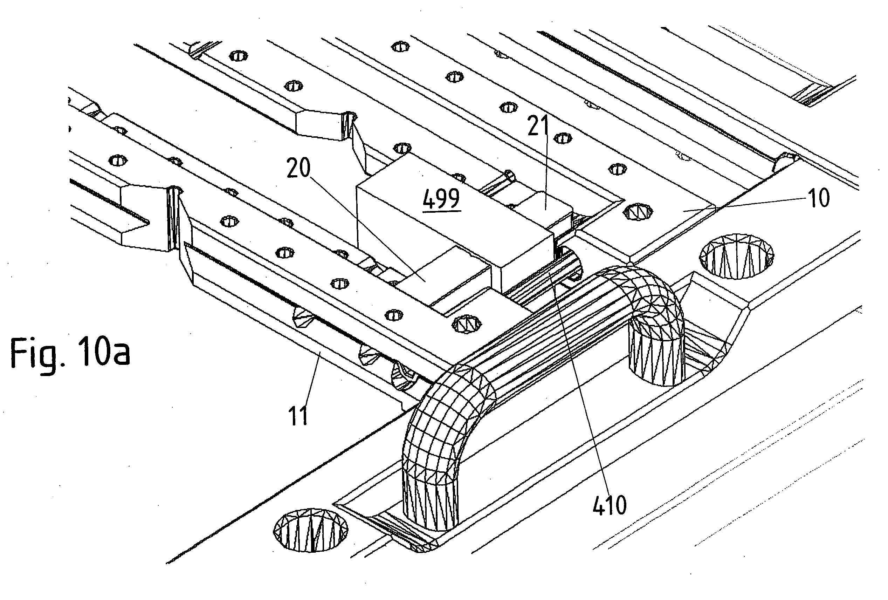

Insbesondere bei Werkstücken mit flachen Seitenflächen wird bei einem Einspannen mittels der Klemmschlitten allerdings diese gesamte Seitenfläche abgedeckt und ist dann einer Bearbeitung nicht zugänglich. Damit auch diesem Fall wenn notwendig eine Bearbeitung mit der Erodieranlage möglich ist, sind weiters noch wie in der Figur 1 in einer Übersichtsdarstellung und wie in Figur 10 und 10a im Detail dargestellt, Schraubstockelemente 20, 21 vorgesehen, mit denen zu bearbeitende Werkstücke über eine wesentliche kleinere Auflagefläche gehalten werden können und so einer Bearbeitung wesentlich besser zugänglich sind. Die Schraubstockelemente 20, 21 werden weiter unten im Text noch näher erläutert.

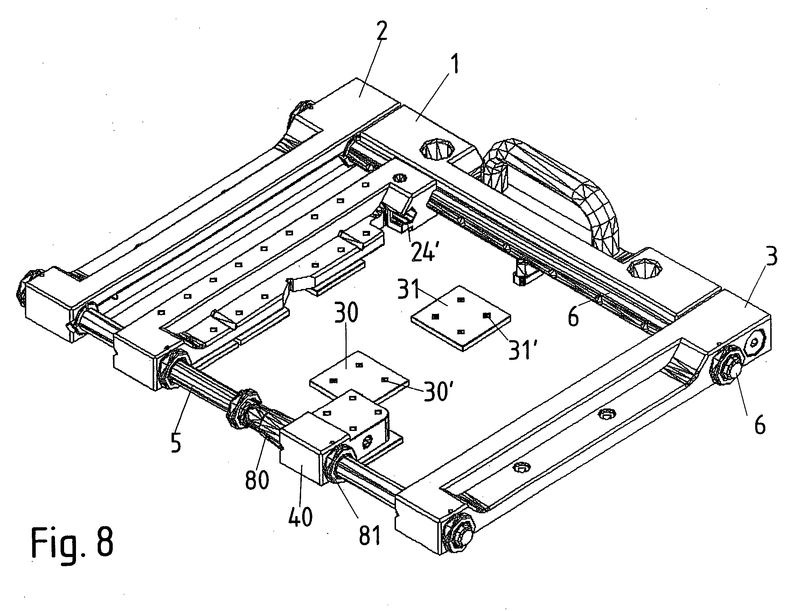

In Figur 8 sind freischwebend weiters noch Plättchen 30, 31 dargestellt. Diese können über entsprechenden Bohrungen, etwa Senkungen 30', 31' für Schrauben in den Plättchen 30, 31 sowie in den Klemmschlitten 10, 11 in verschiedenen Positionen an den Klemmschlitten 10, 11 befestigt werden. Werkstücke können dann auf diesen Plättchen 30, 31 aufgelegt und beispielsweise mit sogenannten, nicht dargestellten Spannpratzen auf diesen Plättchen 30, 31 niedergespannt werden, sodass sie in der Erodieranlage bearbeitet werden können.

Die Plättchen können außerdem noch an einem weiteren Modul 40, das an dem Führungsrohr 5 verschiebbar gelagert ist, befestigt werden. Der Schlitten 40 selbst wird dann beispielsweise mit einem Klemmschlitten 11 verschraubt, so dass er in einer bestimmten Position zuverlässig positioniert ist, wie dies Figur 9 zu entnehmen ist. Die Verschraubung erfolgt dabei ähnlich wie jene der oben beschriebenen Befestigung der Seitenschenkel an der Distanz. Es weist nämlich das Modul 40 zumindest an einer Seite, vorzugsweise aber an beiden Seiten eine V-Nut auf, eine entsprechende Nut weist auch der Klemmschlitten 11 auf. An dem Klemmschlitten 11 werden zwei Walzen 307 in der Nut seitlich neben einem Gewinde angebracht, und das Modul 40 kann dann durch eine entsprechende Bohrung 308 mit dem Klemmschlitten 11 verschraubt werden, wie dies in Figur 9 dargestellt ist. Durch die Walzen 307 ist dabei ein Verdrehen des Moduls 40 gegenüber dem Klemmschlitten 11 zuverlässig verhindert.

Mit diesen verschiedenen Klemmmodulen, wie Klemmschlitten 10, 11 bzw. Modul 40, Plättchen 30, 31, die in verschiedensten Positionen an den Schlitten 10, 11 sowie dem Modul 40 befestigbar sind, sowie den Schraubstockelementen 20, 21 ist eine große Anzahl von verschiedenst geformten Werkstücken zuverlässig positionierbar. Außerdem ist es weiters möglich, auch mehrere Werkstücke gleichzeitig mit der Spannvorrichtung 100 aufgrund des gezeigten Aufbaus einzuspannen, wie dies später noch an Hand anderer Figuren erläutert ist.

Im folgenden soll kurz auf die Funktionsweise bei einem Einspannen von Werkstücken in der Spannvorrichtung eingegangen werden und die verschiedenen Situationen erläutert werden:

### Spannen zwischen Klemmschlitten und Seitenschenkel

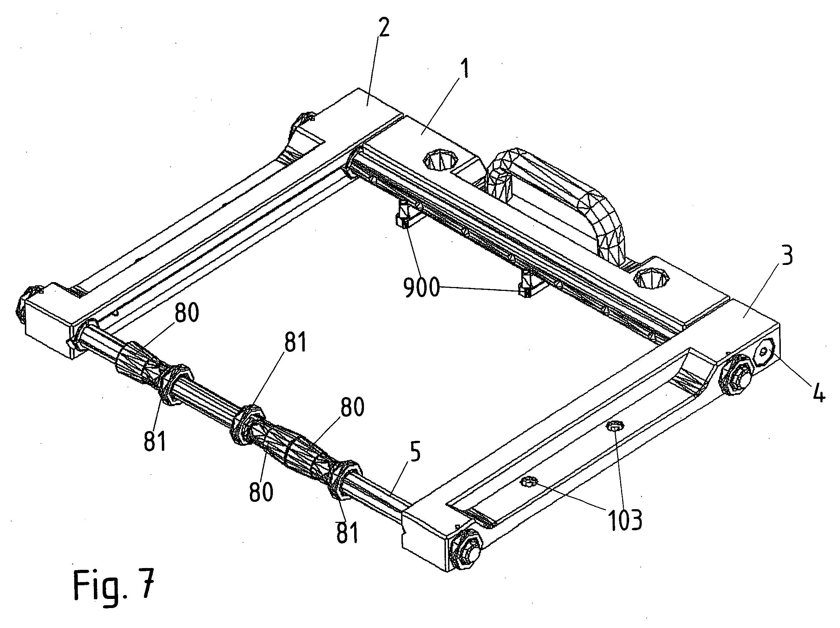

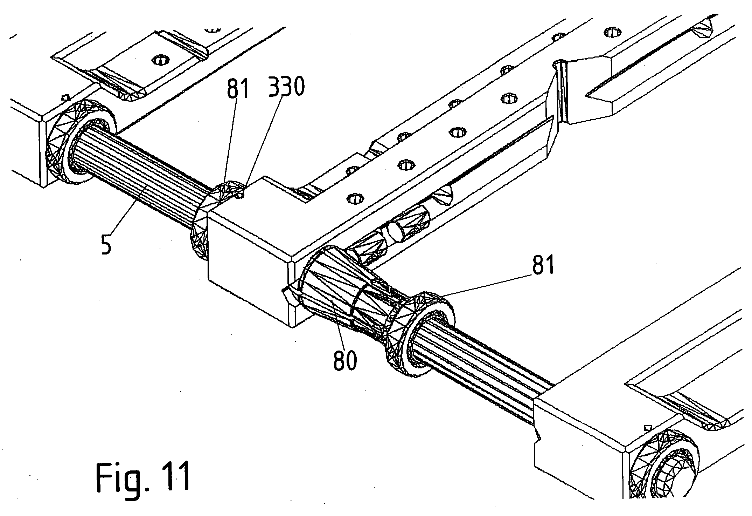

Zum Einspannen eines Werkstückes zwischen einem Klemmschlitten 10, 11 und einem Seitenschenkel 2, 3 wird der entsprechende Klemmschlitten in eine entsprechende gewünschte Position verschoben und in dieser dann fixiert. Die Fixierung erfolgt dabei vorzugsweise mittels sogenannter Spannzangen 80, wie diese beispielsweise in Figur 7 und Figur 11 detailliert dargestellt sind.

Bei diesen Spannzangen 80 handelt es sich um konische Körper, die auf dem Führungsrohr 5 verschiebbar mit engem Sitz angebracht sind. Durch eine entsprechende Öffnung in dem zu fixierenden Körper, etwa einem Schlitten 10, 11, oder einem Modul 40, wird die Spannzange 80 von einer Seite durchgeschoben und mit einem nicht dargestellten Bolzen, der von oben durch eine Öffnung 330 in dem zu befestigenden Körper 10, 11, 40 eingebracht wird, gegen ein Verdrehen gesichert, wozu der Bolzen in eine entsprechende Ausnehmung in der Spannzange 80 eingreift. Abschließend wird von der Gegenseite eine Gegenmutter 81 auf die Spannzange 80 aufgeschraubt, wodurch der konische Körper der Spannzange 80 in die Öffnung des Körpers 10, 11, 40 hineingezogen und dadurch etwas zusammengedrückt wird, wodurch die Spannzange 80 an dem Führungsrohr 5 festgeklemmt wird und somit den Körper 10,11, 40 zuverlässig fixiert.

Mittels der Spannzangen 80 erfolgt somit eine äußerst exakte Zentrierung des Klemmschlittens hinsichtlich des Führungsrohres 5, sodass ein äußerst exakte Positionierung des Klemmschlittens und somit auch des Werkstückes möglich ist.

Die Klemmkraft selbst wird auf das Werkstück dann beispielsweise mittels sogenannter Spannpratzen ausgeübt, mit denen das Werkstück dann an dem Klemmschlitten und/oder dem Seitenschenkel oder an Plättchen (siehe weiter unten), die etwa an dem Klemmschlitten angebracht sind, festgeklemmt wird.

Bei einer anderen Ausführungsform wird die Klemmkraft unmittelbar von dem Klemmschlitten ausgeübt, dazu ist dieser dann nicht mit Spannzangen an dem Führungsrohr fixiert, sondern wird mit einer oder mehreren parallel zu der Distanz verlaufenden Schrauben mit dem Seitenschenkel verschraubt, wodurch eine klemmende Kraft auf das Werkstück ausgeübt wird, wie dies im nächsten Punkt der Beschreibung bei einer ähnlichen Ausführung noch eingehender erläutert ist.

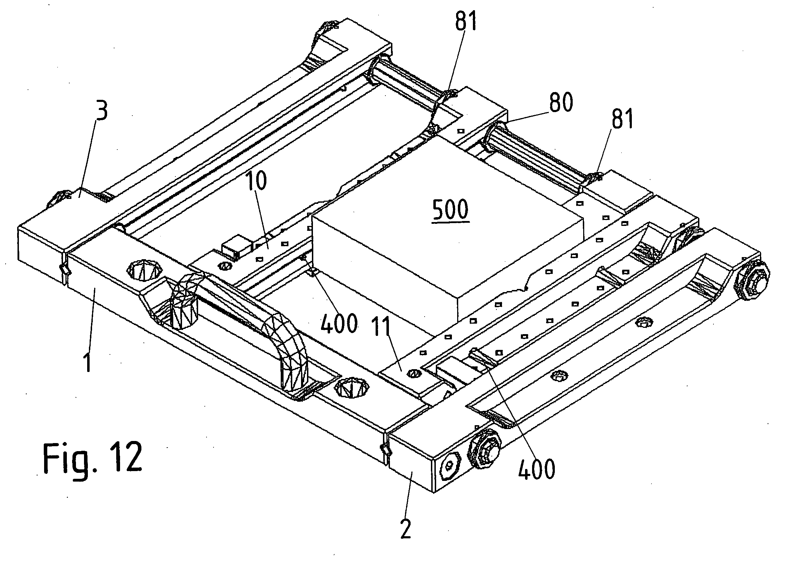

### Spannen zwischen zwei Klemmschlitten (Fig. 12)

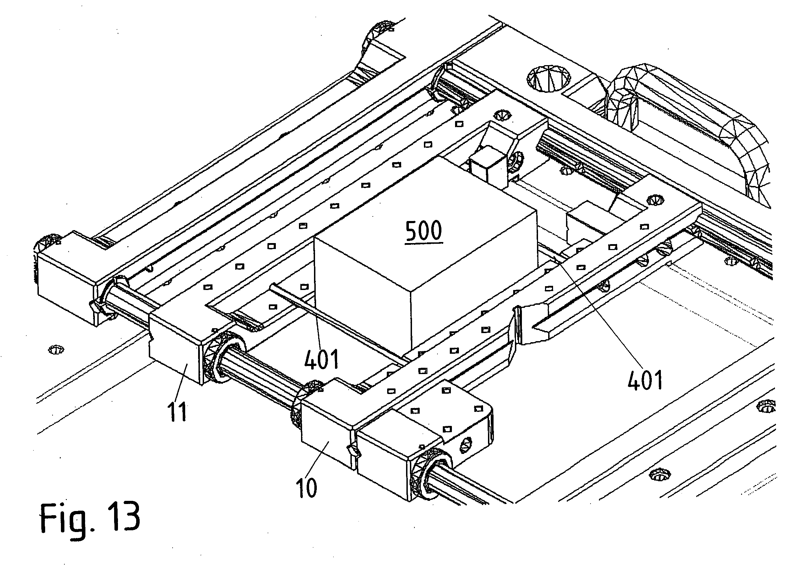

Zum Spannen eines Werkstückes zwischen zwei Klemmschlitten 10, 11 wird vorerst ein erster Schlitten in eine gewünschte Position gebracht und dann mittels Spannzangen 80 wie bereits beschrieben in dieser Position fixiert. Der zweite Klemmschlitten wird nun in eine klemmenden Position gebracht und anschließend werden die beiden Klemmschlitten miteinander über einen oder mehrere entsprechende, vertikal verlaufende Schrauben 401, die in entsprechenden Bohrungen und Gewinde 400 an den beiden Klemmschlitten eingreifen, (siehe Figur 12 und 13) miteinander verschraubt, sodass die beiden Klemmschlitten das Werkstück zuverlässig und exakt klemmen. Eine Fixierung des zweiten Klemmschlittens an dem Führungsrohr 5 ist in diesem Fall nicht notwendig und auch nicht zweckmäßig.

Dabei ist zu beachten, dass Figur 12 und 13 nicht exakt dieselbe Situation darstellen, da die Klemmschlitten in beiden Figuren hinsichtlich ihrer Position zwischen den Seitenschenkeln vertauscht sind, und Figur 13 hier vor allem zur näheren Darstellung der Verbindung der beiden Klemmschlitten herangezogen ist.

An dieser Stelle soll nochmals kurz auf Figur 7 zurück gekommen werden. In dieser Figur sind zwei Schuhe 900 dargestellt, die mittels von oben in entsprechende Bohrungen in den Klemmschlitten eingeschobene Schrauben an dem jeweiligen Klemmschlitten angebracht werden können. Durch ein entsprechend festes Anschrauben verklemmen diese Schuhe 900 den Klemmschlitten an dem Führungselement 6 an der Distanz 1, sodass sich ein noch stabilerer und exakterer Sitz des Klemmschlittens ergibt. In der Regel ist eine solche zusätzliche Fixierung allerdings nicht notwendig, diese eignet sich aber auch zum Fixieren eines nicht benötigten, aber nicht aus der Spannvorrichtung herausgenommenen Klemmschlittens, damit dieser nicht unvorhergesehen verrutscht.

### Spannen zwischen Schraubstockelementen (Figuren 9, 10, 10a)

Damit ein Werkstück auch in weiten Bereichen einer Seitenfläche einer Bearbeitung optimal zugänglich ist, oder um etwa schlanke Stäbe etc. bearbeiten zu können, ist ein Einspannen des Werkstückes zwischen solchen Schraubstockelementen 20, 21 zweckmäßig. Das erste Schraubstockelement 20 ist dabei mit dem Klemmschlitten 11 fest verbunden, vorzugsweise mit diesem verschraubt, sodass das Element 20 auch entfernt werden kann, falls es nicht benutzt wird oder sich als störend erweist. Das Schraubstockelement 20 steht naturgemäß mit seiner Klemmfläche 22 über die Klemmfläche 11' des Klemmschlittens 11 über, ebenso wie das andere Schraubstockelement 21 mit seiner Klemmfläche 23 über die Klemmfläche 10' des Klemmschlittens 10 übersteht.

Während das erste Schraubstockelement 20 in dem zugehörigen Klemmschlitten 11 fix befestigt ist, ist das zweite Schraubstockelement 21 in dem zweiten Klemmschlitten 10 in einer Richtung parallel zu der Distanz 1 beweglich in einer entsprechenden Ausnehmung in dem Klemmschlitten 10 gelagert und geführt. Das Schraubstockelement 21 weist weiters einen Fortsatz 24 auf, der beispielsweise wie gezeigt im wesentlichen zylindrisch ausgebildet st, der in einer entsprechenden Öffnung 24' in dem Klemmschlitten 10 aufgenommen ist. Das Schraubstockelement 21 ist gegen ein Herausfallen mittels eines bekannten, nicht dargestellten Seeger-Ringes gegen ein Herausfallen gesichert.

Zur Klemmung eines Werkstückes werden nun vorerst die beiden Klemmschlitten 10, 11 aneinander herangeführt und dann und es wird ein Klemmschlitten mit entsprechenden Spannzangen an dem Führungsrohr 5 verklemmt. Anschließend wird das Werkstück zwischen den beiden Schraubstockelementen 20, 21 geklemmt, indem das zweite Element 21 mittels einer Schraube 410, die in ein entsprechendes Gewinde in dem Fortsatz 24 eingeschraubt wird, mit dem ersten Klemmschlitten 10 verschraubt wird. Die Verschraubung ist dabei in Figur 10a näher dargestellt. Auf den zweiten Klemmschlitten 10 wird in diesem Fall auch keine Kraft übertragen, dieser dient lediglich als Führung für das zweite Schraubstockelement 21, sodass keine Gefahr eines Verkantens des zweiten Klemmschlitten 10 an seinen Führungen 5, 6 und somit eine Inexaktheit in der Positionierung gegeben ist.

### Aufliegendes Spannen an Plättchen

Eine relativ beliebige Anzahl von Plättchen 30, 31 ist in entsprechenden, vorzugsweise an der Unterseite der Schlitten 10, 11 befindlichen Gewindebohrungen mittels Schrauben anschraubbar. Auf diesen Plättchen 30, 31 können dann Werkstücke mittels nicht dargestellter Spannpratzen festgeklemmt werden. Dies ist insbesondere dann von Bedeutung, wenn eine oder mehrere Seitenflächen eines Werkstückes für eine Bearbeitung zugänglich sein müssen.

Grundsätzlich ist es aber natürlich auch möglich, dass beispielsweise ein Werkstück an einer Seite mit einem Klemmschlitten geklemmt und an einer oder mehreren anderen Stellen mittels Spannpratzen auf einem oder mehreren angesprochenen Plättchen 30, 31 niedergehalten ist.

Die erfindungsgemäße Vorrichtung bietet frei wählbare Auflagepunkte, -flächen oder Schraub- und Spannvorrichtungen für die Befestigung von Werkstücken. Durch ein verstellbares Schlittenpaar 10, 11 und ein zusätzliches Modul 40 können über seine gesamte Nutzungsfläche hin Auflagepunkte und Flächen für unterschiedlichste Werkstückformen und - größen geschaffen werden.

Ein wesentlicher Vorteil der Erfindung liegt darin, dass es sich an die Gegebenheiten und Größen des Werkstückes anpassen und annähern kann. Es ist kein starrer "Träger", dessen Einsatz auf bestimmte Werkstückformen und -größen beschränkt ist.

Die Werkstücke werden auf die gewählten Auflagepunkte oder Flächen gesetzt und beispielsweise mittels herkömmlichen Spannpratzen in Position gehalten. In allen Bereichen des Systems sind die dafür erforderlichen Gewindebohrungen angebracht.

Müssen Teile aufgrund ihrer Beschaffenheit "frei" in den Raum gespannt werden, so bietet das System die Nutzung eines Schraubstock ähnlichen Moduls 20, 21. Die Rachen- oder Spannweite des Moduls 20, 21 kann über die Beweglichkeit des Schlittenpaares 10, 11 gewählt und eingestellt werden.

Auch das Schlittenpaar 10, 11 selbst kann im übertragenem Sinn als Schraubstock für flächengleiche, runde, wie auch unsymmetrische Werkstücke genutzt werden. Spezielle Ausnehmungen, z.B. vertikale und/oder horizontale Nuten wie V-Nuten, bieten die dafür erforderlichen Bedingungen.

Durch die Vielzahl an veränderbaren Spann- und Auflagepunkten ist es auch möglich, mehrere Werkstücke in das System aufzunehmen. Die einzelnen Elemente des Systems sind untereinander wechselbar, wodurch sich, durch ihre spezielle Eigenschaft, auch die Zahl an Spannmöglichkeiten erhöht

Somit nimmt das System auch mehrere Werkstücke unterschiedlichster Form und Größe, "frei" oder "liegend", auf um deren Bearbeitung zu ermöglichen.

Vorzugsweise laufen alle Referenzflächen des Systems parallel mit dem Achsenkreuz (X-, Y-, Z-Achse) der Werkzeugmaschine. Werkstücke können ohne eine zusätzliche Ausrichtung achsengleich zur jeweiligen Maschine am System angeschlagen und befestigt werden.

Durch variable Auflageplatten und integrierte Klemmelemente können Werkstücke am System sowohl aufgelegt als auch "frei" geklemmt werden. Schnellspannelemente erleichtern das rasche heranführen von Spann-, Klemm- und Auflagepunkten an die Gegebenheiten der Werkstücke. Es können mehrere Werkstücke in einem Arbeitsgang befestigt werden.

Grundsätzlich können Werkstücke nur an Flächen oder an Bereichen gespannt werden die nicht einer weiteren Bearbeitung unterliegen. Sie können nur dort gehalten und fixiert werden wo sie nicht weiter bearbeitet werden müssen. Jedes Werkstück bietet deshalb nur eine begrenzte Anzahl von Haltepunkten oder Flächen. Diese sind in Folge für die Fixierung des Werkstückes schon "reserviert".

Nun gilt es, innerhalb eines Systems, abgestimmt auf die Beschaffenheit des Werkstückes, Möglichkeiten für dessen Fixierung zu schaffen. Am Beispiel eines Würfels, der von zwei Seiten bearbeitet werden muss, können weitere zwei Seiten für dessen Fixierung genutzt werden. Diese können gegenüber liegen oder aneinander grenzen.

Liegen sie sich gegenüber, so ist die klassische "Schraubstockmethode" wohl die sinnvollste Art der Fixierung. Grenzen sie aneinander, so wird das Werkstück in den meisten Fällen auf einer L-förmigen Fläche aufgelegt und dort mittels Spannpratzen fixiert.

Für größere, runde Werkstücke hingegen, eignet sich am Besten eine Auflage über drei Punkte oder kleinere Flächen.

Kleine runde Werkstücke, wie etwa Stifte oder Rundlinge, finden wiederum den besten Platz und Halt in prismenartigen Halterungen.

In den Figuren 12 - 19 sind noch weitere Beispiele für eingespannte Werkstücke in einer erfindungsgemäßen Spannvorrichtung 100 gezeigt, auf die im folgenden noch kurz eingegangen werden soll.

In Figur 12 ist ein Werkstück 500 mit einer im wesentlichen quadratischen Grundfläche in der Spannvorrichtung 100 eingespannt. Die Befestigung erfolgt dabei dergestalt, dass das Werkstück 500 einerseits auf einem Plättchen 31, welches an einem Klemmschlitten 10 angeschraubt ist, und außerdem noch auf einem weiteren, in der Darstellung nicht erkennbaren Plättchen, welches an dem bereits erwähnten Modul 40, der mit dem anderen Klemmschlitten 11 verschraubt ist, befestigt ist. Das Werkstück 500 ist mittels nicht dargestellter Spannpratzen an den Plättchen festgeklemmt. Die beiden Klemmschlitten bzw. in diesem Fall der eine Klemmschlitten 10 sowie das mit dem anderen Klemmschlitten 11 verbundene Schlittenmodul 40 sind mittels Spannzangen 80 an dem Führungsrohr 5 festgeklemmt, sodass sich eine stabiler Sitz des Werkstückes 500 realisieren lässt. Figur 13 zeigt in einer anderen Perspektive nochmals eine ähnliche Situation, hier ist zusätzlich noch das Verschrauben der beiden Klemmschlitten 10, 11 mittels eines oder mehrerer Schrauben 401 zu erkennen, die entsprechenden Bohrungen 400 sind in Figur 12 dargestellt.

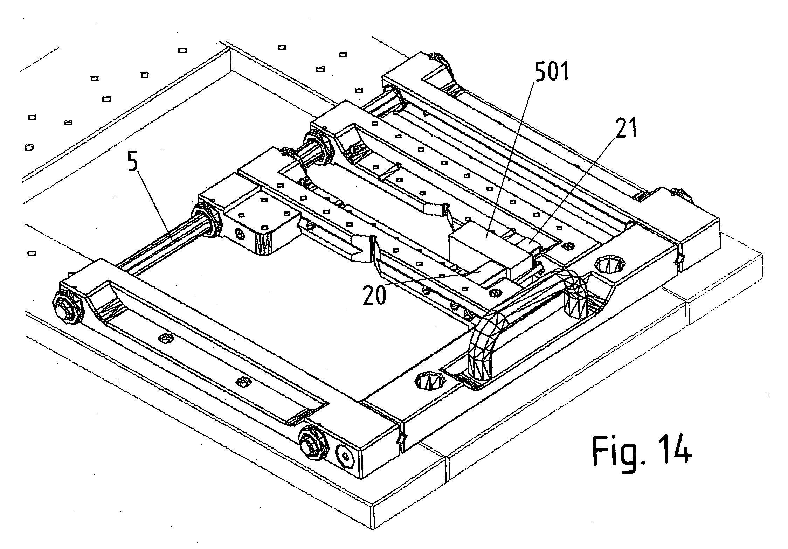

Vergleicht man die Anordnung der Klemmschlitten 10, 11 mit jener nach der Figur 14, so kann man erkennen, dass hier die Klemmschlitten hinsichtlich ihrer Position zwischen den Seitenschenkeln 2, 3 vertauscht sind. Diese Vertauschbarkeit ergibt, wie bereits erwähnt, eine hohe Flexibilität der Vorrichtung 100.

In Figur 14 ist ein länglicher Block 501 zwischen den beiden Schraubstockelementen 20, 21 eingespannt, wie dies bereits weiter oben näher beschrieben wurde. In dieser Anordnung ist das Werkstück nun an beiden Längsseiten einer Bearbeitung zugänglich, und in einem oberen Bereich ist das Werkstück sogar an seinem gesamten Umfang bearbeitbar. Außerdem ist es bei dieser Art des Einspannens möglich, dass die Anlage relativ nahe an das zu bearbeitende Werkstück mit seinen Drahtführungen heranfahren kann, was beispielsweise bei einem Einspannen zwischen den Klemmschlitten 10,11 nicht immer gewährleistet ist. Durch ein solches näher Heranfahren kann die Leistung der Maschine wesentlich erhöht und somit auch Zeit bei der Bearbeitung gespart werden.

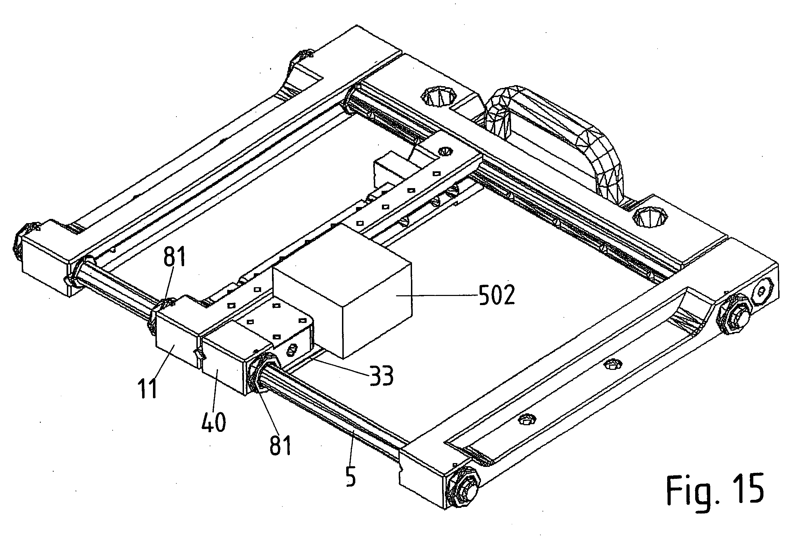

Figur 15 zeigt eine Konstellation, in der lediglich ein Klemmschlitten 11 vorhanden ist, obwohl grundsätzlich der zweite Klemmschlitten auch in der Vorrichtung hätte belassen werden können. Mit dem Klemmschlitten 11 ist das Modul 40 verbunden und an dem Führungsrohr 5 mittels einer Spannzange fixiert. Das Werkstück 502 liegt auf einem ersten Plättchen 33, welches an dem Modul 40 befestigt ist, sowie einem weiteren, in der Darstellung nicht erkennbaren Plättchen auf und ist dann noch mit einem oder mehreren Spannpratzen auf diesen Plättchen festgeklemmt. Wie man aus der Zeichnung erkennen kann, ist dann eine Bearbeitung an zwei Seiten des Werkstückes problemlos möglich, da diese frei zugänglich sind.

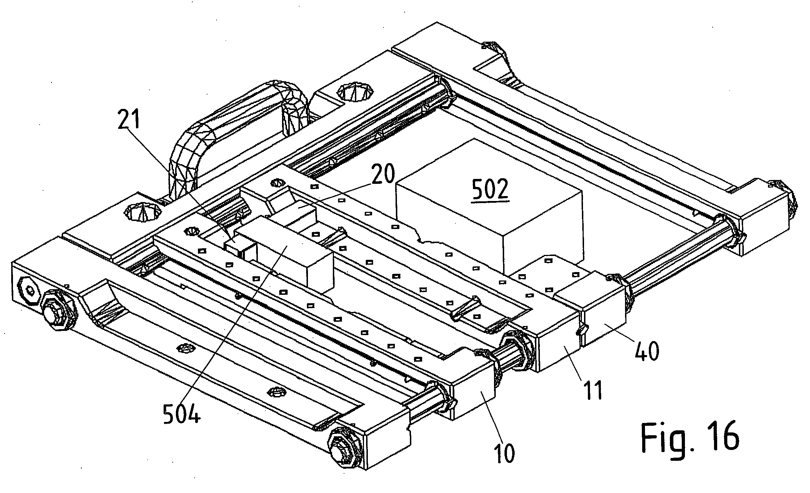

Figur 16 zeigt eine ähnliche Situation wie jene in Figur 15, zusätzlich ist aber noch der zweite Klemmschlitten 10 vorgesehen, und zwischen den beiden Klemmschlitten 10, 11 ist ein weiteres Werkstück 504 eingespannt. Dabei kann das Werkstück 504 zwischen Klemmflächen der beiden Klemmschlitten 10, 11 eingespannt sein, in dem gezeigten Fall ist allerdings das Werkstück zwischen den beiden Schraubstockelementen 20, 21 wie weiter oben beschrieben eingespannt.

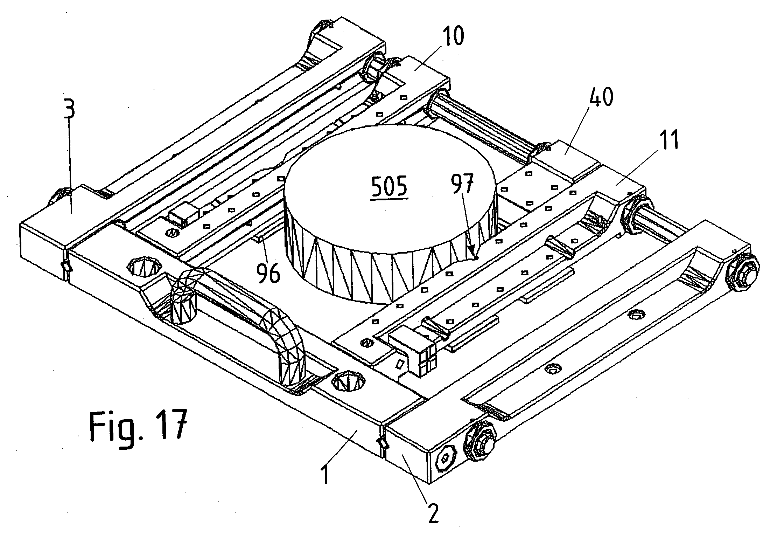

Figur 17 zeigt noch das Einspannen eines Werkstückes 505 mit rundem Querschnitt. Dieses liegt in dem gezeigten Fall wieder auf Plättchen 96, die an der Unterseite der Klemmschlitten 10, 11 montiert sind, auf. Weiters weisen die Klemmschlitten noch entsprechende Einkerbungen 97, etwa Nuten, auf, damit durch die so entstehende größere Auflagefläche ein stabiler Sitz des Werkstückes 505 gewährleistet ist. Weiters ist auch noch, wie der Figur 17 zu entnehmen, wiederum das Zusatzmodul 40 vorgesehen, das mit einem der Klemmschlitten 11 verbunden und fixiert ist. Auch an diesem ist vorzugsweise wieder an der Unterseite zumindest ein Plättchen für die Auflage des Werkstückes vorgesehen.

Ausnehmungen wie die Nuten 97 bieten den Vorteil einer größeren Auflagefläche und somit eines stabilen Sitzes. Werden diese außerdem noch achsparallel zu den Maschinenachsen angebracht, sind die Werkstücke bei einem Einspannen auch gleich achsparallel zu diesen Maschinenachsen ausgerichtet.

Grundsätzlich ist es auch möglich, die Auflageplättchen 96 wegzulassen, und auch das Zusatzmodul 40 ist nicht unbedingt notwendig, d.h. es kann prinzipiell das Werkstück auch lediglich zwischen den beiden Klemmschlitten 10, 11 eingeklemmt werden.

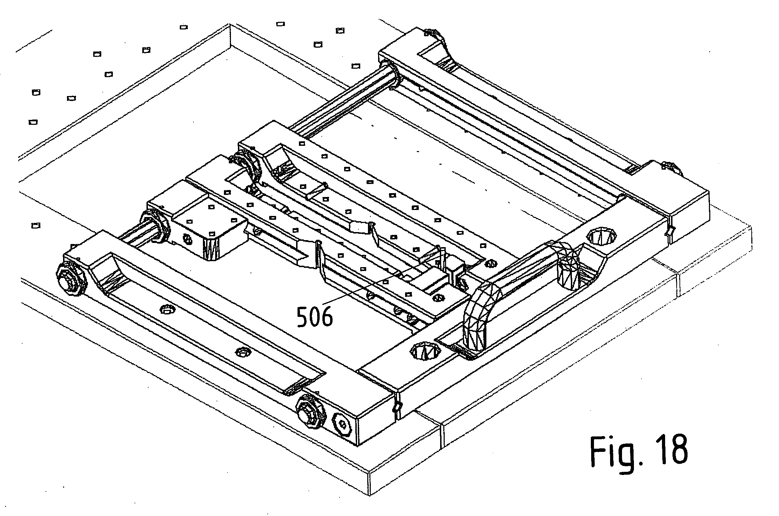

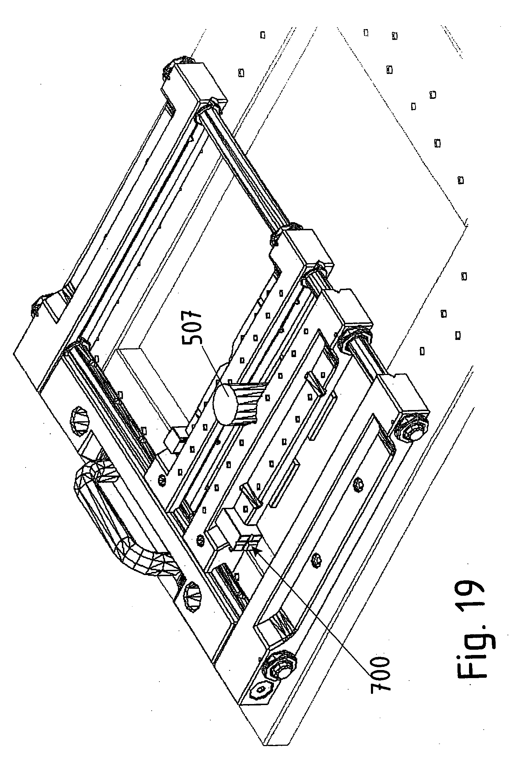

Figur 18 und Figur 19 zeigen noch zwei unterschiedliche Arten des Fixierens von Rundlingen. Durch die entsprechenden Einkerbungen in den Klemmschlitten 10, 11 nach Figur 19 ist es einfach, denn Rundling 507 parallel zu der Z-Achse der Maschine auszurichten.

Der schmale Rundling 506 in Figur 18 ist über die weiter oben bereits eingehend beschriebenen Schraubstockelemente fixiert. Bei einer solchen Art der Befestigung lassen sich besonders einfach Konturen in einem obere Deckfläche des Werkstückes 507 einarbeiten.

Damit eine achsparallele Ausrichtung des Werkstückes zuverlässig gegeben ist, ist es zweckmäßig, wenn die Schraubstockelemente über ein Achskreuz 700 verfügen, wie dies in Figur 19 an dem einen Schraubstockelement gut zu erkennen ist.

Mit der erfindungsgemäßen Vorrichtung können Werkstücke unbestimmter Form und Beschaffenheit aufgenommen und "frei" im Arbeits- und Verfahrbereich von funkenerosiven Werkzeugmaschinen angeordnet werden.

Es kann metallisches Halbzeug befestigt werden, welches präzise und achsengleich an Drahterosionsmaschinen weiter bearbeitet werden soll. Die erfindungsgemäße Vorrichtung stellt eine Ergänzung des vom Werkzeugmaschinenhersteller gebotenen Arbeitstisches dar.

Die Erfindung ermöglicht die rationale Aufnahme unterschiedlichster Werkstücke zu den sonst beschränkten Möglichkeiten eines vom Maschinenhersteller gebotenen, starren Arbeitstisches.

Das System, auf dem vorhandenen Werkzeugmaschinentisch aufgesetzt und fixiert, bietet grundsätzlich eine Variation der sonst "starren" Aufspannfläche. Die Position von Auflage-, Halte- und Spannflächen des Systems können individuell an die Form des Werkstückes angeglichen werden. Es ermöglicht eine indirekte und rasche Anpassung der Aufspannfläche an das Werkstück.

So können Werkstücke auch "frei" in den Arbeitsbereich der jeweiligen Werkzeugmaschine gespannt werden, um Bearbeitungen aus mehreren Richtungen und über ihre gesamte Grundfläche hin zu ermöglichen.

Selbst die Position der Werkstücke im Arbeitsbereich der Maschine kann frei gewählt werden. Durch die Beweglichkeit des Systems ist man an starre Auflagepunkte nicht mehr gebunden.

Diese Beweglichkeit ermöglicht auch die Aufnahme mehrerer Werkstücke unterschiedlicher Formen und Größe. Wende- und verschiebbare Befestigungspunkte schaffen Bedingungen, um runde wie mehreckige Formen zugleich aufzunehmen. Dadurch wird auch eine spätere Bearbeitung mehrerer Werkstücke bei nur einem Bestückungsvorgang möglich.

Ein grundsätzlicher Zweck der Vorrichtung liegt in der Dezimierung der Aufspann- und Rüstzeiten an der Werkzeugmaschine selbst. Für das Aufspannen und Einrichten der Werkstücke an der Maschine ist sonst deren Stillstand notwendig. Diesen Stillstand gilt es durch eine flexible Spannvorrichtung so gering wie möglich zu halten oder gar zu vermeiden. Die Erfindung spannt sämtliche Werkstücke ohne zusätzliche Komponenten. Dies bietet die Grundlage für einen raschen, einfachen Einsatz und stellt ein in sich geschlossenes System dar, welches sich variabel an unterschiedliche Anforderungen anpasst.

Das Aufspannen und Einrichten der Werkstücke kann auch außerhalb der Maschine erfolgen. Während die Maschine arbeitet, wird das System außerhalb der Anlage mit Werkstücken bestückt und zur gegebenen Zeit damit in die Maschine gehoben. Dort zentriert, kann rasch mit einer neuen Bearbeitung begonnen werden. So werden Stehzeiten der Anlage dezimiert und ihre Auslastung wird optimiert.

Das Spannsystem findet seinen Einsatz an allen herkömmlichen Drahterosionsmaschinen unterschiedlichster Fabrikation und Größe. Ohne Verlust seiner Funktionen kann es an die Gegebenheiten der jeweiligen Werkzeugmaschine angeglichen werden.

Das Aufnehmen von Werkstücken an Drahterosionsmaschinen unterliegt, wie bereits mehrmals erwähnt, gewissen Kriterien. Die Anzahl von möglichen Spann- und Auflagepunkten ist Werkstück-spezifisch unterschiedlich und auch begrenzt.

Eine wesendliche Vorraussetzung ist, dass Werkstücke über ihre Geometrieachsen mit denen der Maschine parallel oder in einem exakt bestimmten Winkel verlaufen.

Die festgelegten Bearbeitungsachsen (X-, Y- und Z-Achsen) des Werkstückes müssen daher parallel zu dem Achsenkreuz der Maschine oder in einem exakt bestimmten Winkel dazu liegen.

Um dies zu erreichen, muss das Werkstück vor der Bearbeitung ausgerichtet werden. Meist geschieht dies, in dem mit Hilfe einer Messuhr das Werkstück von der Maschine abgefahren wird. Das Werkstück wird dann händisch so lange nachgerichtet, bis sein Achsenkreuz mit dem der Maschine parallel oder gleich ist.

Während dieser Vorbereitung bleibt jedoch die Maschine für eine mögliche Bearbeitung blockiert. Es kann während der Einrichtephase keine Bearbeitung stattfinden.

Aus diesem Grunde sollten Werkstücke auch außerhalb der Maschine gerüstet und ausgerichtet werden können. Dies wird mit der vorliegenden, erfindungsgemäßen Spannvorrichtung ermöglicht.

Die für eine Bearbeitung vorgesehenen Werkstücke können auf einem externen Ausrichteplatz in das Spannsystem gesetzt und dort ausgerichtet werden. Für die Fertigung wird dann das komplett bestückte System in die Maschine gehoben und dort fixiert.

Damit entfällt die Rüst- und Einrichtezeit auf der Maschine selbst und ihre Auslastung ist gewährleistet.

Die Anschaffung und der Einsatz von Drahterosionsmaschinen sind mit hohen Kosten verbunden. Moderne Technologien und der Fortschritt auf dem Sektor der Steuerungselektronik machten aus bislang konventionellen Werkzeugmaschinen wahre Roboter.

Um eine optimale Auslastung von heutigen Drahterosionsmaschinen zu gewährleisten sind auch flexible Spannsysteme von großer Bedeutung.

Maschinen sollten in der Regel "ihrer Pflicht" zu arbeiten nachkommen und der personelle Aufwand für deren Bedienung und Rüstung so gering wie möglich gehalten werden.

Es sollte schon während einer Bearbeitung möglich sein die Maschine auf die nachkommende Arbeiten und Werkstücke vorzubereiten und zu Rüsten.

Ist dies gefordert, so setzt man "Parallelsysteme" ein die, außerhalb der Maschine mit Werkstücken versehen, dann zum gegebenen Zeitpunkt in die Maschine gehoben werden.

Während die Maschine arbeitet, kann schon auf einem externen Einrichteplatz ein zweite Spannvorrichtung mit Werkstücken bestückt und wie oben beschrieben gerüstet werden. Die Werkstücke können dort mit Hilfe eines Messverfahrens auch bereits ausgerichtet und zentriert werden.

Wird nach dem Ende einer Bearbeitung dann das bestückte Spannsystem in die Maschine gehoben, so entfällt dort das aufwendiges Rüsten, Ausrichten und Zentrieren der Werkstücke.

Es wird dadurch der Stillstand der Maschine kurz gehalten und ihre Kapazität erhöht.

Das ausgehobene System mit den fertig bearbeiteten Werkstücken kann dann bequem während der nächsten Bearbeitung und außerhalb der Maschine abgerüstet werden.

Ein "palletierbares" Spannsystem dezimiert somit die Rüst- und Abrüstzeiten an der Maschine und trägt zu einem großen Teil an ihrer Auslastung bei.

Die technische Voraussetzung dafür sind fixe Aufnahmepunkte an der Maschine sowie auf dem eingesetztem Spannsystem. Auf dem Maschinentisch sind dies einfach aufgesetzte Spannzapfen, am Spannsystem dazu passgenaue Referenzbohrungen, wie dies den einzelnen Figuren zu entnehmen ist. Das bestückte System wird auf die erwähnten Zapfen gesteckt und dort mit herkömmlichen Schrauben fixiert.

## Patentansprüche

1. Spannvorrichtung (100) zum Einspannen von Werkstücken (500, 501, 502, 504, 505, 506) für die Bearbeitung mit Erodiermaschinen, insbesondere Drahterodiermaschinen, bestehend aus einem Rahmen, welcher aus einer Distanz (1) sowie zwei zueinander parallel verlaufenden Seitenschenkeln (2, 3), die jeweils mit der Distanz (1) in einem rechten Winkel verbunden sind, gebildet ist, wobei der Rahmen auf einem Maschinentisch (101) befestigbar ist, und zwischen den beiden Seitenschenkeln (2, 3) zumindest ein Klemmschlitten (10, 11) parallel zu der Distanz (1) verschiebbar und in einer gewünschten Position gegen ein weiteres Verschieben verklemmbar ist.

2. Vorrichtung nach Anspruch 1, **dadurch gekennzeichnet, dass** zwischen den Seitenschenkeln (2, 3) zwei verschiebbare Klemmschlitten (10,11) vorgesehen sind.

3. Vorrichtung nach Anspruch 1 oder 2, **dadurch gekennzeichnet, dass** die beiden Seitenschenkel (2, 3) in einem äußeren, der Distanz (1) abgewandten Bereich mit einem Führungsrohr (5) verbunden sind, auf dem der zumindest eine Klemmschlitten (10, 11) verschiebbar geführt ist.

4. Vorrichtung nach Anspruch 3, **dadurch gekennzeichnet, dass** das Führungsrohr (5) mit den Seitenschenkeln (2, 3) lösbar verbunden ist.

5. Vorrichtung nach einem der Ansprüche 1 bis 5, **dadurch gekennzeichnet, dass** ein weiteres Führungselement (6) im Bereich der Distanz (1) und parallel zu der Distanz (1) zwischen den beiden Seitenschenkeln (2, 3) befestigbar ist.

6. Vorrichtung nach Anspruch 5, **dadurch gekennzeichnet, dass** das Führungselement (6) unmittelbar an der Längsseite der Distanz (1) befestigt ist.

7. Vorrichtung nach einem der Ansprüche 4 bis 6, **dadurch gekennzeichnet, dass** der zumindest eine Klemmschlitten (10, 11) eine Bohrung aufweist, mittels welcher er an dem Führungsrohr (5) gelagert ist.

8. Vorrichtung nach Anspruch 6 oder 7, **dadurch gekennzeichnet, dass** das Führungselement (6) als zylinderförmiger Körper ausgeführt ist und der Klemmschlitten (10, 11) an einer dem Führungselement (6) zugewandten Seite eine Nut aufweist, mit welcher der Klemmschlitten (10,11) das Führungselement (6) zumindest bereichsweise umgreift.

9. Vorrichtung nach einem der Ansprüche 1 bis 8, **dadurch gekennzeichnet, dass** zumindest ein weiteres Modul (40) auf dem Führungsrohr (5) verschiebbar gelagert und an diesem gegen ein weiteres Verschieben verklemmbar ist.

10. Vorrichtung nach Anspruch 9, **dadurch gekennzeichnet, dass** das zumindest eine Modul (40) an einem Klemmschlitten (10,11) befestigbar ist.

11. Vorrichtung nach einem der Ansprüche 7 bis 10, **dadurch gekennzeichnet, dass** der Klemmschlitten (10, 11) mittels einer Spannzange (80) an dem Führungsrohr (5) verklemmbar ist, wobei die Spannzange (80) auf dem Führungsrohr (5) verschiebbar sitzend von einer Seite in die Bohrung des Klemmschlittens (10, 11) einschiebbar und von der anderen Seite mittels einer Gegenmutter (81) an dem Führungsrohr (5) verklemmbar ist.

12. Vorrichtung nach einem der Ansprüche 9 bis 11, **dadurch gekennzeichnet, dass** das Modul (40) mittels einer Spannzange (80) an dem Führungsrohr (5) verklemmbar ist, wobei die Spannzange (80) auf dem Führungsrohr (5) verschiebbar sitzend von einer Seite in eine Bohrung des Moduls (40) einschiebbar und von der anderen Seite mittels einer Gegenmutter (81) an dem Führungsrohr (5) verklemmbar ist.

13. Vorrichtung nach einem der Ansprüche 1 bis 12, **dadurch gekennzeichnet, dass** an der Unterseite eines Klemmschlittens (10, 11) und/ oder an der Unterseite des zumindest einen Moduls (40) ein oder mehrere Plättchen (30, 31) zur Auflage eines zu bearbeitenden Werkstückes befestigbar sind.

14. Vorrichtung nach Anspruch 13, **dadurch gekennzeichnet, dass** das Werkstück auf einem Plättchen (30, 31) mittels zumindest einer Spannzange befestigt ist.

15. Vorrichtung nach einem der Ansprüche 2 bis 14, **dadurch gekennzeichnet, dass** die beiden Klemmschlitten (10, 11) relativ zueinander mittels zumindest eines Verbindungselementes (401), vorzugsweise einer Schraube, fixierbar sind.

16. Vorrichtung nach einem der Ansprüche 1 bis 15, **dadurch gekennzeichnet, dass** ein Klemmschlitten (10, 11) an seiner zumindest einen Klemmfläche (10', 10", 11', 11") Aufnahmen, Einkerbungen, Vertiefungen, wie beispielsweise V-Nuten (90, 91, 92, 93) aufweist.

17. Vorrichtung nach einem der Ansprüche 1 bis 16, **dadurch gekennzeichnet, dass** die Seitenschenkel (2, 3) an ihren Innenflächen Aufnahmen, Einkerbungen, Vertiefungen, wie beispielsweise V-Nuten (2') aufweisen.

18. Vorrichtung nach einem der Ansprüche 2 bis 17, **dadurch gekennzeichnet, dass** an einem ersten Klemmschlitten (11) ein erstes Schraubstockelement (20) fest angeordnet ist, an einem zweiten Klemmschlitten (10) in einer entsprechenden Aufnahme ein zweites Schraubstockelement (21) parallel zu der Längsseite des Distanz (1) verschiebbar und gegen ein Herausfallen aus der Aufnahme gesichert horizontal gegenüber dem ersten Schraubstockelement (20) gelagert ist, und das verschiebbare Schraubstockelement (21) mittels zumindest einer Schraube (410), welche weiters an dem ersten, das erste Schraubstockelement (20) fest aufnehmenden Klemmschlitten (11) angreift, in Bezug auf diesen ersten Klemmschlitten (11) verschiebbar und in einer bestimmten Position fixierbar ist.
